# EUROPEAN PATENT APPLICATION

(11) **EP 1 240 828 A1**
(43) Date of publication of application: **18.09.2002**
(21) Application number: 02075323.2
(22) Date of filing: 25.01.2002
(51) Int. Cl.: A23C 20/00, A23L 1/0524

(54) **Consumable, viscoelastic, stringy composition, process for its production and dry product for use in the process**

(30) Priority: 14.03.2001 DE 10112252
(71) Applicant: UNILEVER N.V., 3013 AL Rotterdam (NL)
(72) Inventor: Latza, Stefan, 74072 Heilbronn (DE)
(74) Representative: Wurfbain, Gilles L.

(57) **Abstract**

Composition that draws strings (e.g. like melted cheese), and process for preparing it. Composition is freeze-dried, and rehydratable. Composition comprises cheese immitation (e.g. known Mozarella imitation), pectin, swellable material (not being potato powder), soluble Calcium salt. Product is suitable for e.g. cheese fillings (e.g. deep fried products), gratin toppings, pizza toppings, snacks, etcetera.

## Description

The present invention relates to a composition in the form of a consumable, viscoelastic, stringy composition or in the form of a dry product which can be reconstituted by mixing with water to form such a consumable, viscoelastic, stringy composition, a process for its production and, in particular, a dry product which after stirring with a liquid can be used to produce such a composition. In particular the invention relates to an imitation cheese which can be produced from such a dry product by rehydration and is a viscoelastic composition which has, like cheese (e.g. when molten), a stringy (strand-forming) structure.

A known commercial product consists of about 42% by weight of dried potato granules and 55% by weight of pulverized natural dried cheese. Minor components which can be present are, in addition, spices, salt and pepper. The product is prepared by mixing the product with crème fraiche and/or boiling water, swelling for two minutes and heating for two minutes with kneading stirring. The product is further kneaded for a short time without heating. This produces a coherent, viscoelastic composition which has a texture from which broad strands or strings can be pulled (like chewing gum).

This product is to date the sole dried product on the market made of cheese powder and a further quantitatively important swellable admixture (in this case potato granules) which still has the stringy property after rehydration. This property is originally linked with the potato raw material.

Potato granules are relatively expensive and, in addition, are not taste-neutral, but have a somewhat strong inherent taste. In addition, the known commercial product comprises a significant amount of natural cheese. There was therefore a requirement for a product made of cheaper raw materials, which is taste-neutral, and is universally usable, not only as an imitation cheese, for producing a viscoelastic, stringy composition. In this case the properties typical of cheese, as displayed by, for example, mozzarella or provolone, or typical cheese fondue mixtures, which customarily consist of Swiss cheese, that is to say stringiness in the heated molten state, should be retained.

According to the invention it has surprisingly been found that pectin, with addition of calcium ions together with a mixture of an imitation cheese and a swellable particulate carrier, can be processed to form a dry product which, after stirring with a liquid and heat treatment, forms a viscoelastic composition having the stringy property (strand formation).

In its most general form, the present invention therefore comprises a dry product which, after stirring with a liquid and heat treatment, forms a consumable, viscoelastic, stringy composition comprising
a) 40-90 parts by weight of a dried imitation cheese,
b) 1-20 parts by weight of pectin or a pectin-rich product,
c) 8-58 parts by weight of a swellable carrier, excluding potato powder, and
d) 0.1-10 parts by weight of a soluble calcium salt having delayed calcium ion release.

Preferably, as component a) a comminuted, dried commercially conventional imitation cheese, in particular imitation mozzarella, is used.

Dried imitation cheeses are known and are commercially available. Cheese analogues which are able to melt at the same temperature as natural cheese are termed imitation cheese. Imitation cheeses are usually produced from edible caseinates, vegetable fat, water and other customary additives, such as natural or synthetic flavourings, salts (sodium chloride and other salts), acids, colourings, emulsifiers, stabilizers and preservatives (EP 0363 741 and US patents cited therein).

Imitation cheeses are termed "dried" when they have an a_{w} value of from 0.01 to 0.90, advantageously from 0.10 to 0.65, and, in particular, from 0.20 to 0.30. "Comminution" is taken to mean, for example, slicing, grinding, chopping, grating and cutting.

A commercially conventional, grated, dried imitation mozzarella consists of vegetable fat, caseinate, native starch and other additives; customarily such an imitation cheese comprises 28-33% protein, 38-43% fat and 10-12% starch. Generally, imitation cheeses, as used according to the invention as starting material, consist of an oil-in-water emulsion, the water phase being to a greater or lesser extent firmly gelled, that is to say fixed, by casein.

Preferably, a dried, commercially conventional imitation cheese is used. Imitation cheeses used according to the invention generally have a degree of drying corresponding to a water activity (ratio between the vapour pressure of the water-containing medium and that of pure water) a_{w} = 0.01-0.80.

A further essential constituent of the inventive dry product is a swellable, particulate carrier, potato products being excluded, however.

The swellable carrier can be, for example, cereal semolina, cereal middlings, cornflour or polenta. Such raw materials are not only cheaper than potato base materials, but, furthermore, have considerably better, that is to say more neutral, flavour and taste properties.

A further important constituent of the inventive dry product is pectin.

It is known that pectin can also be used as thickener and emulsion stabilizer in the production of cheese or cheese-containing preparations.

EP 645 966 describes an edible plastic dispersion based on rapidly gellating starch consisting of at least two condensed phases, the one phase consisting of a gel-forming starch and the other phase consisting of a gellating agent selected from gelatin, carrageenan, alginate, pectin, carob bean gum, xanthan gum, guar gum and others. EP 574 973 describes the production of edible dispersions from at least two gellating agents which form separate phases, in which case the gellating agents used can also be biopolymers, for example pectins. EP 543 973 discloses the production of a fat-free natural cheese, for example an imitation mozzarella, from a milk solid substrate, co-using a gum, for example xanthan gum, guaran, agar, carrageenan, carab bean gum, tragacanth, pectin or carboxymethyl cellulose.

The use of pectin as stabilizer in the production of an imitation cheese is disclosed in US 5807601. EP 384 816 describes the production of a cheese-containing drink using pectin as stabilizer. FR 2622772 describes the use of pectin in the production of processed cheese.

Pectins which are suitable for use in the present invention are low-esterified or high-esterified polygalacturonic acids and/or polygalacturonic acid-rich natural products, such as apple powder, dried apple pieces or banana powder. Usually, the polygalacturonic acids are α-1,4-linked and esterified with methanol.

The development of the viscoelastic composition is considerably enhanced by addition of a soluble calcium salt, for example calcium gluconate, calcium lactate, calcium acetate, CaCl₂ or calcium citrate. The calcium salt is either added last after heating and rehydration, or a calcium salt having delayed calcium release (sequestrant) is used, with this also being able to be, for example, coated calcium lactate or tricalcium citrate.

A typical dry product according to the present invention consists of
a) 45-80% by weight of dried imitation cheese,
b) 1-6% by weight of pectin,
c) 15-50% by weight of swellable carrier and
d) 1-8% by weight of calcium salt.

A preferred dry product consists of
a) 50-55% by weight of dried imitation mozzarella,
b) 2-4% by weight of pectin,
c) 35-45% by weight of wheat semolina or wheat middlings and
d) 2-4% by weight of calcium lactate.

The invention also relates to a process for producing the inventive viscoelastic composition. According to this process
a) 40-90 parts by weight of a dried imitation cheese,
b) 1-20 parts by weight of pectin or a pectin-rich product and
c) 8-58 parts by weight of a swellable carrier, excluding potato powder,
   are stirred into 1.5 to 3 times the amount of water and heated vigorously with stirring until the rehydrating imitation cheese begins to melt, whereupon this composition is allowed to react with
d) 0.1-10 parts by weight of a soluble calcium salt and the resultant composition is kept at a reduced heat until the desired viscoelastic structure is obtained.

If rapidly available Ca ions were immediately added, the pectin would no longer dissolve sufficiently, but already begin to form lumps, in particular in the case of low-esterified pectin. When a readily available Ca source is used, the Ca salt should therefore not be allowed to act until after the rehydration and melting of the imitation cheese.

The first heating step is generally carried out at a temperature of 60-100°C, preferably 70-90°C, for 1-4 minutes, preferably 1-3 minutes. After initial heating to this temperature, at which the imitation cheese begins to melt, the reaction can be continued at a lower temperature, for example 40-80°C, in particular 60-75°C, for 2-6 minutes. An excessive heating period must be avoided, since the product then loses it optimum viscosity properties again.

The amount of water into which the solid components are stirred is not critical. It is generally 1.5 to 3 times the solid components, preferably 1.8 to 2.4 times.

According to the invention a consumable, viscoelastic, stringy composition can be produced which has general use, not only as imitation cheese. Also when an imitation cheese is used a product can be obtained which corresponds in odour and taste properties to a natural cheese product; when an appropriate imitation cheese is used, it is possible to produce neutral compositions which exhibit a comparable mouthfeel and melt behaviour to natural cheese.

The viscoelastic structure having the stringy property occurs in particular in a temperature range of 57-76°C, with optimum expression between 60°C and 73°C.

On reheating the composition becomes viscoelastic again (thermal reversibility) with reformation of the stringy property. Therefore, during the reheating, temperatures higher than 85-90°C are preferably avoided.
The invention thus also relates to the consumable, viscoelastic, stringy composition which can be produced by the inventive process and consists of 1 part by weight of a solid fraction consisting of
a) 40-90 parts by weight (based on dry mass) of an imitation cheese,
b) 1-20 parts by weight of pectin or a pectin-rich product,
c) 8-58 parts by weight of a swellable carrier, excluding potato powder
d) 0.1-10 parts by weight of a soluble calcium salt
and 1.5 to 3 parts by weight of water.

The invention enables the further extension of an imitation cheese, this product being not only cholesterol-free and nutritionally balanced, but also still cheaper. It is suitable preferably as, or for producing, cheese purée free of potato raw material, for deep-fried products (for example cheese croquettes), cheese fillings, gratin toppings, pizza toppings or coatings.

The inventive consumable, viscoelastic, stringy composition can be stored and traded as such, but it can also be dried, preferably freeze-dried, to give a more readily handleable dry powder which can be reconstituted by mixing with water to give the viscoelastic, stringy composition. Although the reconstitution proceeds only slowly, it can be promoted by careful heating and stirring with kneading.

### Examples

### Example 1

50 g of wheat semolina, 66 g of dried imitation mozzarella (a_{w} = 0.65, rice-grain-sized shreds), 4 g of HV pectin (Green Ribbon, pure, Obipektin), are stirred into 250 ml of mains water using a whisk. It is heated with stirring using a wooden spoon on a gas flame with strong heat. Firstly swelling and thickening proceed (after appropriate 2 min) and the rehydrating cheese granules begin to melt. 4 g of calcium lactate are added and the flame is reduced to low to moderate heat. Using the stirring spoon, the composition is stirred and kneaded for approximately 3 min until an increasing plastification and clumping together proceeds to give the desired viscoelastic, stringy (strand-forming) structure.

### Example 2

50 g of wheat *middlings,* 60 g of dried imitation mozzarella *powder* (ground, redried to a_{w} = 0.30, particle size < 1 mm), 4 g of NV pectin (Purple Ribbon, pure, Orbipektin), 4 g of calcium chloride are added and treated as in Example 1. The desired viscoelastic, stringy (strand-forming) structure is also formed.

### Example 3

50 g of corn starch, 70 g of dried imitation mozzarella (redried to a_{w} = 0.30, rice-grain-sized shreds), 4 g of HV pectin (Green Ribbon, pure, Obipektin), 4 g of tricalcium citrate, are used and treated as in Example 1. The desired viscoelastic, stringy (strand-forming) structure is also formed.

### Example 4

50 g of wheat middlings, 60 g of dried imitation mozzarella powder (ground, redried to a_{w} = 0.30, particle size < 1 mm), 4 g of NV pectin (Purple Ribbon, pure, Obipektin), 4 g of calcium lactate are used and treated as in Example 1. The desired viscoelastic, stringy (strand-forming) composition is also formed.

This composition was then spread on a metal sheet, frozen at -40°C, and freeze-dried overnight (approximately 16 h) under a high vacuum (< 0.1 bar) at 40°C hotplate temperature. The material dried in the form of a sheet was then pulverized in a laboratory mixer (Rotor) to give a dry powder.

110 g of the powder thus produced were stirred into 250 ml of cold water using a whisk in a pot. The resultant initially noncoherent paste was then carefully heated with kneading stirring using a wooden spoon (avoiding burn-on). After some minutes the viscoelastic, stringy composition is formed again.

## Claims

1. Consumable, viscoelastic, stringy composition of 1 part by weight of a solid fraction consisting of:
a) 40-90 parts by weight (based on dry matter) of a imitation cheese,
b) 1-20 parts by weight of pectin or a pectin-rich product,
c) 8-58 parts by weight of a swellable carrier, excluding potato powder, and
d) 0.1-10 parts by weight of a soluble calcium salt and 1.5 to 3 parts by weight of water.

2. Process for producing a consumable, viscoelastic, stringy composition, **characterized in that**
a) 40-90 parts by weight of a dried imitation cheese,
b) 1-20 parts by weight of pectin or a pectin-rich product and
c) 8-58 parts by weight of a swellable carrier, excluding potato powder,
are stirred into 1.5 to 3 times the amount of water and heated vigorously with stirring until the rehydrating imitation cheese begins to melt, this composition is then reacted with
d) 0.1-10 parts by weight of a soluble calcium salt
and the resultant composition is kept at reduced heat until the viscoelastic structure is obtained.

3. Process according to Claim 2, **characterized in that**, in the first stage, the composition is heated to 60-100°C and, after reaction with the calcium salt, is heated in the second stage to 40-80°C.

4. Dry product for use in the process according to Claim 2 or 3, comprising:
a) 40-90 parts by weight of a dried imitation cheese,
b) 1-20 parts by weight of pectin or a pectin-rich product,
c) 8-58 parts by weight of a swellable carrier, excluding potato powder, and
d) 0.1-10 parts by weight of a soluble calcium salt having delayed calcium ion release.

5. Dry product according to Claim 4, **characterized in that**, as component a), it comprises a commercial imitation mozzarella.

6. Dry product according to Claim 4 or 5, **characterized in that**, as pectin component b) it comprises low-esterified or high-esterified polygalacturonic acid and/or polygalacturonic acid-rich natural products.

7. Dry product according to one of Claims 4-6, **characterized in that**, as calcium salt, it comprises calcium gluconate, calcium lactate, calcium acetate, calcium chloride or calcium citrate.

8. Dry product according to one of Claims 4-7, **characterized in that**, as swellable carrier, it comprises cereal semolina, cereal middlings, cornflour or polenta.

9. Dry product according to one of Claims 4-8, **characterized in that** it consists of
a) 45-80% by weight of dried imitation cheese,
b) 1-6% by weight of pectin,
c) 15-50% by weight of swellable carrier and
d) 1-8% by weight of calcium salt.

10. Dry product according to one of Claims 4-9, **characterized in that** it consists of
a) 50-55% by weight of dried imitation mozzarella,
b) 2-4% by weight of pectin,
c) 35-45% by weight of wheat semolina or wheat middlings and
d) 2-4% by weight of calcium lactate.

11. Dry powder which can be reconstituted by mixing with water to give the viscoelastic, stringy composition according to Claim 1, which can be produced by drying, preferably freeze-drying, and pulverizing a composition according to Claim 1.
